(19) Europäisches Patentamt
European Patent Office
Office européen des brevets

(11) **EP 2 923 457 B1**

(12) **EUROPEAN PATENT SPECIFICATION**

(45) Date of publication and mention
of the grant of the patent:
**04.04.2018 Bulletin 2018/14**

(51) Int Cl.:
*H04B 7/02* (2018.01)     *H04B 7/04* (2017.01)
*H04B 7/06* (2006.01)     *H04L 1/06* (2006.01)
*H04J 13/00* (2011.01)     *H04B 7/0452* (2017.01)

(21) Application number: **13863359.9**

(22) Date of filing: **16.12.2013**

(86) International application number:
**PCT/CN2013/089492**

(87) International publication number:
**WO 2014/090197 (19.06.2014 Gazette 2014/25)**

(54) **SYSTEMS AND METHODS FOR OPEN-LOOP SPATIAL MULTIPLEXING SCHEMES FOR RADIO ACCESS VIRTUALIZATION**

SYSTEME UND VERFAHREN FÜR RÄUMLICHE MULTIPLEXING-SCHEMATA IN EINEM GESCHLOSSENEN KREIS FÜR FUNKZUGRIFFS-VIRTUALISIERUNG

SYSTÈMES ET PROCÉDÉS POUR DES SCHÉMAS DE MULTIPLEXAGE SPATIAL EN BOUCLE OUVERTE POUR LA VIRTUALISATION D'ACCÈS RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2012  US 201261737614 P**
**22.05.2013  US 201313900410**

(43) Date of publication of application:
**30.09.2015  Bulletin 2015/40**

(73) Proprietor: **Huawei Technologies Co., Ltd.
Longgang District
Shenzhen, Guangdong 518129 (CN)**

(72) Inventors:
• **MA, Jianglei
Ottawa, Ontario K2M 2W5 (CA)**
• **NIKOPOUR, Hosein
Ottawa, Ontario K2S 0E6 (CA)**
• **BAYESTEH, Alireza
Ottawa, Ontario K2L 2W8 (CA)**
• **JIA, Ming
Ottawa, Ontario K2A 0BE (CA)**
• **ZHU, Peiying
Kanata, Ontario K2M 2L4 (CA)**

(74) Representative: **Pfenning, Meinig & Partner mbB
Patent- und Rechtsanwälte
Theresienhöhe 11a
80339 München (DE)**

(56) References cited:
**EP-A2- 2 530 896     WO-A1-2007/082409
WO-A1-2010/102435     WO-A2-2008/024462
CN-A- 102 232 319     US-A1- 2007 211 786
US-A1- 2012 114 021**

• **R HOSHYAR ET AL.: 'Novel Low-Density Signature for Synchronous CDMA Systems Over AWGN Channel.' IEEE TRANS. ON SIGNAL PROCESSING vol. 56., no. 4, April 2008, XP011205892**
• **R. HOSHYAR ET AL.: 'LDS-OFDM an Efficient Multiple Access Technique' IEEE 71 ST VTC. XP055206817**

**Description**

TECHNICAL FIELD

The present invention relates to systems and methods for wireless communications and, in particular embodiments, to systems and methods for open-loop spatial multiplexing for radio access virtualization.

BACKGROUND

Radio access virtualization is a potential technology for solving inter-transmit point interference in a fundamental way. It can significantly enhance radio access network capacity and user equipment (UE) experience. Radio access virtualization can be realized by transmit point virtualization and reception point virtualization. Transmit point virtualization provides UE-centric transmit point optimization powered by cloud radio access network (CRAN). Receiving point virtualization is based on UE cooperative reception which is powered by UE direct communications.

Closed loop (CL) multi-user (MU) multiple-input multiple-output (MIMO) can provide better performance, but it requires accurate channel measurement and device feedback. More feedback overhead is required by CL CoMP. With the densification of Tx nodes, more and more overhead is needed for supporting CL multiple transmitter coordinated transmission. Open loop (OL) CoMP needs less feedback, however it provides limited gain. Radio access virtualization can enable a more advanced transmission scheme.

US 2012/0114021 A1 discloses a method for configuring a transmission mode for a backhaul link transmission in a radio communication system including a relay station. The method comprises: a step in which a base station transmits, to the relay station, a relay-physical downlink control channel (R-PDCCH) containing backhaul control information; and a step in which the base station transmits, to the relay station, a relay-physical downlink shared channel (R-PDSCH) containing backhaul data, wherein the R-PDCCH is transmitted in one transmission mode selected from a plurality of predetermined transmission modes, and a reference signal transmitted through the R-PDCCH for the demodulation of the R-PDCCH is determined in accordance with said selected transmission mode.

US 2007/0211786 A1 relates to multicarrier sub-layer for direct sequence channel and multiple-access coding. Carrier Interferometry (CI) provides wideband transmission protocols with frequency-band selectivity to improve interference rejection, reduce multipath fading, and enable operation across non-continuous frequency bands. Direct-sequence protocols, such as DS-CDMA, are provided with CI to greatly improve performance and reduce transceiver complexity. CI introduces families of orthogonal polyphase codes that can be used for channel coding, spreading, and/or multiple access.

Unlike conventional DS-CDMA, CI coding is not necessary for energy spreading because a set of CI carriers has an inherently wide aggregate bandwidth. Instead, CI codes are used for channelization, energy smoothing in the frequency domain, and interference suppression.; CI-based ultra-wideband protocols are implemented via frequency-domain processing to reduce synchronization problems, transceiver complexity, and poor multipath performance of conventional ultra-wideband systems. CI allows wideband protocols to be implemented with space-frequency processing and other array-processing techniques to provide either or both diversity combining and sub-space processing. CI also enables spatial processing without antenna arrays. Even the bandwidth efficiency of multicarrier protocols is greatly enhanced with CI. CI-based wavelets avoid time and frequency resolution trade-offs associated with conventional wavelet processing. CI-based Fourier transforms eliminate all multiplications, which greatly simplifies multi-frequency processing. The quantum-wave principles of CI improve all types of baseband and radio processing.

WO 2008/024462 A2 discloses a multiple-input multiple-output (MIMO) transmitter and receiver for supporting downlink (DL) communication of single channel codewords. According to this document, the DL communication of single channel codewords is supported by providing a MIMO transmitter and receiver. The transmitter includes $N_T$ transmit antennas for transmitting spatial streams to a receiver having $N_R$ receive antennas, a precoder and a space-time or space-frequency matrix construction unit in communication with the precoder and the transmit antennas. The space-time or space-frequency matrix construction unit constructs a matrix that defines a threaded algebraic space-time codeword based on a number of virtual antennas, $N_V$, and the number of transmit antennas, $N_T$. The transmitter operates in an open loop mode when no feedback information from the receiver is available, a semi-open loop mode when channel rank information is available, and a closed loop mode when channel state information (CSI) is available. The receiver is configured to provide feedback to the transmitter on a per received spatial stream basis.

"R HOSHYAR ET AL.: Novel Low-Density Signature for Synchronous CDMA Systems Over AWGN Channel", IEEE TRANS. ON SIGNAL PROCESSING, vol. 56., no. 4, April 2008 (2008-04), XP011205892" discloses a novel low-density signature (LDS) for synchronous CDMA systems over AWGN channel. In this document, a novel low-density signature structure is provided for transmission and detection of symbol-synchronous communication over memoryless Gaussian channel. The idea behind the proposal of this document is basically to change the interference pattern being seen by each user. The proposed LDS structure limits the amount of interference occurred on each chip over which the user transmits a copy of his symbol.

## SUMMARY OF THE INVENTION

The object of the present invention is solved by the independent claims. Advantageous embodiments are described by the dependent claims.

In accordance with an embodiment, a system for open-loop spatial multiplexing for radio access virtualization includes a plurality of antenna ports and a processor coupled to the plurality of antenna ports and configured to spread a spreading sequence over at least a portion of the plurality of antenna ports in a spatial domain, wherein the processor is configured to cause the antenna ports to transmit multiple spreading sequences simultaneously by sequence superposition, wherein the spreading sequences are selected from a pre-defined pool, such as a matrix, a total number of a plurality of physical antennas is equal to or greater than a spreading factor, and a signature length for a device receiving communication from the antenna ports is determined according to a multiple-input multiple-output (MIMO) rank of the device and the MIMO rank is determined from device feedback and device measurement, wherein the signature length is the number of antenna ports over which the spreading sequence is spread.

In accordance with another embodiment, a method for open-loop spatial multiplexing for radio access virtualization includes determining a spreading sequence for a plurality of transmit antenna ports, spreading a signal with the determined spreading sequence over a plurality of transmitter antenna ports, and transmitting multiple spread signals simultaneously in a spatial domain superposition, wherein the spreading sequences are selected from a pre-defined pool, such as a matrix, a total number of a plurality of physical antennas is equal to or greater than a spreading factor, and a signature length for one of the multiple spread signals is equal to a multiple-input multiple-output (MIMO) rank supported by a corresponding receiver, wherein the signature length is the number of transmitter antenna ports over which the spreading sequence is spread.

In accordance with another embodiment, a network component configured for open-loop spatial multiplexing for radio access virtualization includes a processor and a computer readable storage medium storing programming for execution by the processor, the programming including instructions to implement action in the above described method.

In accordance with another embodiment, a method for open-loop spatial multiplexing for radio access virtualization includes receiving with a plurality of receiver antennas a plurality of overlaid sequences from a plurality of transmit antenna ports, wherein the overlaid sequences comprise a spreading sequence spread over a spatial domain, and jointly decoding the overlaid sequences received by a plurality of receiver antennas, or transmitting the overlaid sequences received by a plurality of receiver antennas to a central processor through a backhaul network for decoding.

## BRIEF DESCRIPTION OF THE DRAWINGS

For a more complete understanding of the present invention, and the advantages thereof, reference is now made to the following descriptions taken in conjunction with the accompanying drawing, in which:

Figure 1 illustrates a network for communicating data;

Figure 2 illustrates an embodiment spatial domain LDS transmitter;

Figure 3 illustrates an embodiment spatial domain LDS receiver;

Figure 4 illustrates an embodiment open-loop SU-MIMO;

Figure 5 illustrates an embodiment open-loop MIMO for hyper transceiver (DL);

Figure 6 illustrates an embodiment open-loop MIMO for hyper transceiver (UL);

Figure 7 illustrates an embodiment mapping signature to transmit antennas;

Figure 8 illustrates an embodiment two-dimensional LDS;

Figure 9 shows an embodiment spreading matrix (S) that can be used to define a spreading sequence for LDS modulation;

Figure 10 is an embodiment low complexity MPA that can be implemented at a low complexity LDS receiver;

Figure 11 is an embodiment method for open-loop spatial multiplexing schemes for radio access virtualization; and

Figure 12 is a processing system that can be used to implement various embodiments.

## DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

An embodiment provides open-loop spatial multiplexing schemes for radio access virtualization. An embodiment provides a spatial domain low density spreading-based spatial multiplexing scheme for radio access virtualization.

In embodiments, a Walsh Hadamard code, a Zadoff-Chu sequence, or an other orthogonal/low correlation sequence is used to superposition signals. In another embodiment, a low density signature (LDS) structure is used to reduce the number of interferers in each chip in a code division multiple access (CDMA) system. In an embodiment, this scheme is also applied in an orthogonal frequency division multiplexing (OFDM) system by spreading the symbols on a number of sub-carriers. This provides frequency diversity gain for both the signal and interference. Because of the low density feature of the spreading sequence, only a fraction of the signal generates interference to other signals. This provides a much smaller search space and a more affordable detection technique. With an advanced Rx algorithm, such as a message passing algorithm (MPA), reasonably good multi-user detection performance can be obtained even in an overloaded system.

An embodiment applies the concept of LDS to distributed transmit antennas and distributed receive antennas providing additional multiplexing dimension and diversity. An embodiment applies LDS to the spatial domain to enable open-loop MIMO transmission for the communications between a virtual transmitter and virtual receiver. A single transmitter and single receiver are special cases. Additional information about LDS and MPA may be found in U.S. Patent Application No. 61/788,881 entitled "Low Complexity Receiver for Low Density Signature Modulation" filed March 15, 2013. An embodiment provides spatial domain low density signature spreading. An embodiment allows spatial domain overloading. An embodiment provides an OL joint transmission scheme without channel state information (CSI) feedback or with limited CSI feedback. An embodiment provides better performance than existing OL non-coherent CoMP with same feedback overhead. Embodiments may be implemented in cellular networks and devices, such as mobile terminals, infrastructure equipment, and the like.

As used herein, the term spatial multiplexing (SM) is a transmission technique in MIMO wireless communication to transmit independent and separately encoded data signals (i.e., streams) from each of the multiple transmit antenna ports. In an embodiment, the multiple transmit antenna ports may be virtual transmitter antenna ports. Therefore, the space dimension is reused, or multiplexed, more than one time. In an open-loop spatial multiplexing MIMO system with $N_t$ transmitter antennas and $N_r$ receiver antennas, the input-output relationship can be described as

$$y = Hx + n$$

where $x = [x_1, x_2, ..., x_{N_t}]$ is the $N_t \times 1$ vector of transmitted symbols, $y$, $n$ are the $N_r \times 1$ vectors of received symbols and noise respectively and $H$ is the $N_r \times N_t$ matrix of channel coefficients. The maximum spatial multiplexing order is equal to the min ($N_r$, $N_t$).

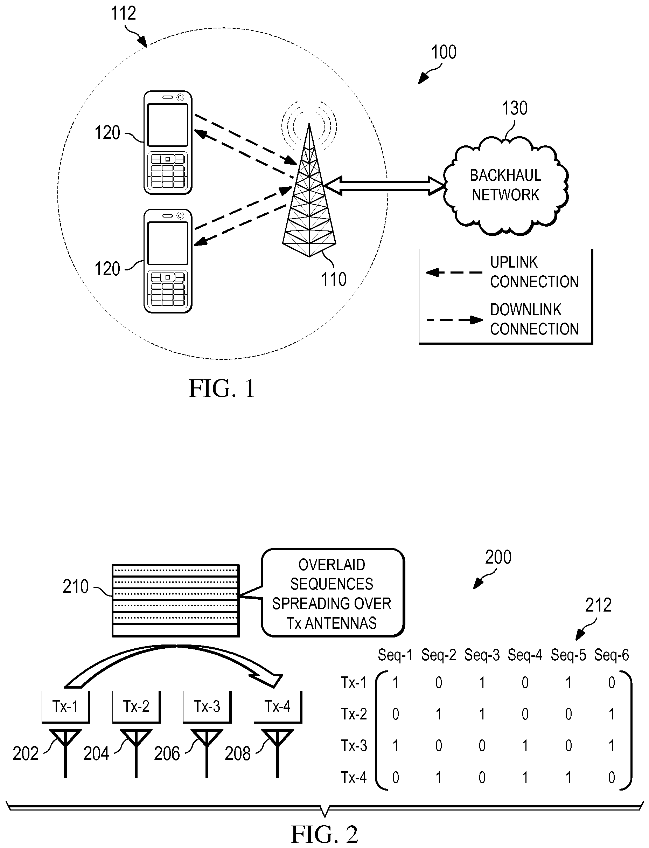

Figure 1 illustrates a network 100 for communicating data. The network 100 comprises an access point (AP) 110 having a coverage area 112, a plurality of user equipment (UEs) 120, and a backhaul network 130. As used herein, the term AP may also be referred to as a transmission point (TP) and the two terms may be used interchangeably throughout this disclosure. The AP 110 may comprise any component capable of providing wireless access by, inter alia, establishing uplink (dashed line) and/or downlink (dotted line) connections with the UEs 120, such as a base station transceiver (BST), an enhanced base station (eNB), a femtocell, and other wirelessly enabled devices. The UEs 120 may comprise any component capable of establishing a wireless connection with the AP 110. The backhaul network 130 may be any component or collection of components that allow data to be exchanged between the AP 110 and a remote end (not shown). In some embodiments, the network 100 may comprise various other wireless devices, such as relays, femtocells, etc.

Figure 2 illustrates an embodiment spatial domain LDS transmitter system 200. Using an OL MIMO scheme, the low density signature is spread over a number of transmit antenna ports 202, 204, 206, 208. Multiple signatures can be transmitted simultaneously by signature superposition. The signatures are selected from a pre-defined pool, such as a matrix 212. The antenna ports 202, 204, 206, 208 can be co-located or distributed. The signature length (the number of antenna ports over which the signature is spread) is determined by the rank of MIMO channel. The number of virtual antenna ports is equal to the spreading factor. The total number of PHY-Tx antenna port is equal or greater than the spreading factor. A precoder maps the virtual antenna ports to PHY-Tx antenna ports. The total number of Rx antenna ports is equal or greater than the spreading factor. No CSI feedback is needed.

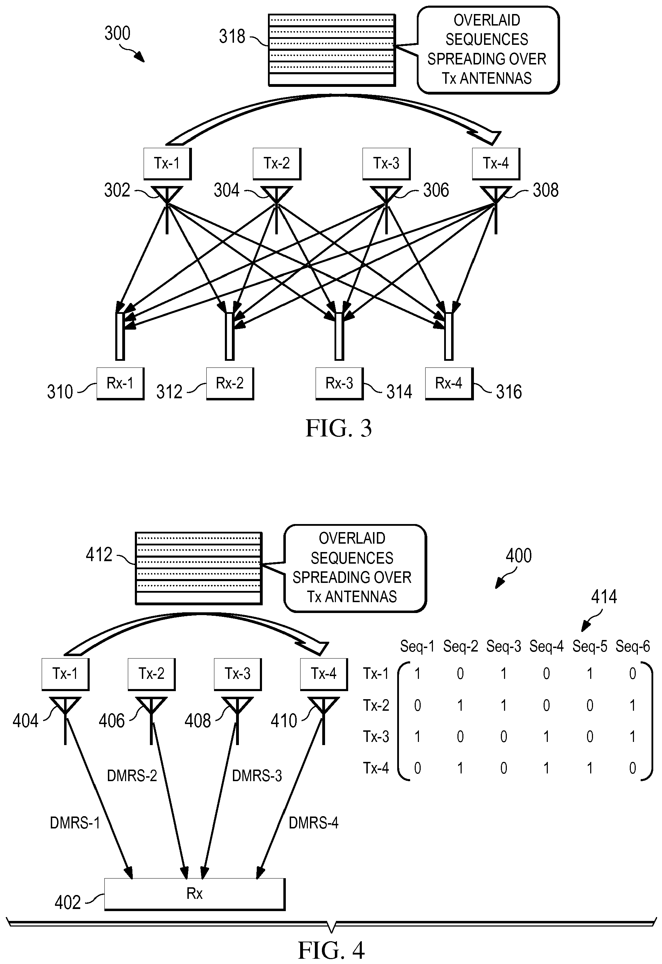

Figure 3 illustrates an embodiment spatial domain LDS receiver system 300. Spatial domain LDS signals are received by a group of receiver antennas 310, 312, 314, 316. These can be located in the same device or different devices. The number of receiver antennas 310, 312, 314, 316 should be equal to or larger than the spreading factor. For the scenario where the receive antennas 310, 312, 314, 316 are located in difference devices, the devices should be able to exchange data between each other. If the number of receiver antennas 310, 312, 314, 316 for a single device is equal or larger than the number of transmit antenna ports 302, 304, 306, 308, then data exchange between devices is not mandatory. However, multiple devices joint reception can improve the performance.

Figure 4 illustrates a first embodiment open-loop single user (SU)-MIMO system 400. The open-loop SU-MIMO system 400 includes a plurality of physical transmitter antennas 404, 406, 408, 410 and a receiver 402. The signature length is the same as the MIMO rank supported by the device in which the receiver 402 is located. The network obtains the device's MIMO rank information through UE feedback and UE measurement. The spreading factor is over virtual antenna ports if the device's MIMO rank is less than the number of physical antennas. A fixed precoder can be applied to map virtual antenna ports to physical antennas. In an embodiment, a MIMO equalizer and an MPA are applied to decode the signals.

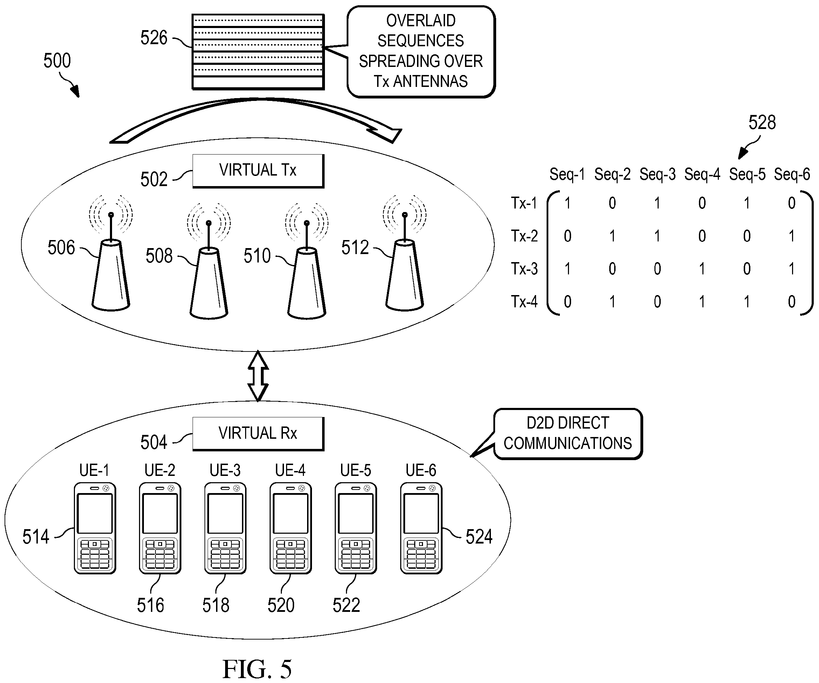

Figure 5 illustrates a second embodiment open-loop MIMO scheme 500 for hyper transceiver (downlink (DL)) where multiple transmitters communicate with multiple receivers. The scheme 500 includes a plurality of antennas 506, 508, 510, 512 that form a virtual transmitter 502 and a plurality of receivers 514, 516, 518, 520, 522, 524 that jointly form a virtual receiver 504. The receivers 514, 516, 518, 520, 522, 524 are UEs designated as UE-1, UE-2, UE-3, UE-4, UE-5, and UE-6. For the hyper transceiver, multiple transmitters 506, 508, 510, 512 jointly transmit signals and multiple receivers 514, 516, 518, 520, 522, 524 jointly decode received signals. The virtual receiver 504 guarantees enough receiver 514, 516, 518, 520, 522, 524 antennas to enable full rank spatial domain LDS. The multiple device virtual receiver 504 can support a bigger virtual transmitter 502, and provide better diversity gain and cooperation gain. The virtual receiver 504 allows overload to enhance system capacity.

In an example embodiment, 4 antenna ports from 4 transmit nodes form a virtual transmitter. 6 devices form a virtual receiver. Each device has one or more receiver antennas. Low density signatures are spread to four Tx antenna ports. Data carried by different signatures can be targeted to the same device or different devices. The signals are received by all antennas in the virtual receiver. The received signals are decoded jointly by all devices or a portion of the devices. The minimum number of the joint-decoding devices is determined by the MIMO rank supported the joint-decoding devices. In a first option, the signal processing is handled by a centralized signal processing unit. In a second option, the signal processing is taken care by multiple signal processing units that are connected with each other wirelessly (or via wireline, for example in an office). MIMO equalizer and MPA can be applied to decode the signals.

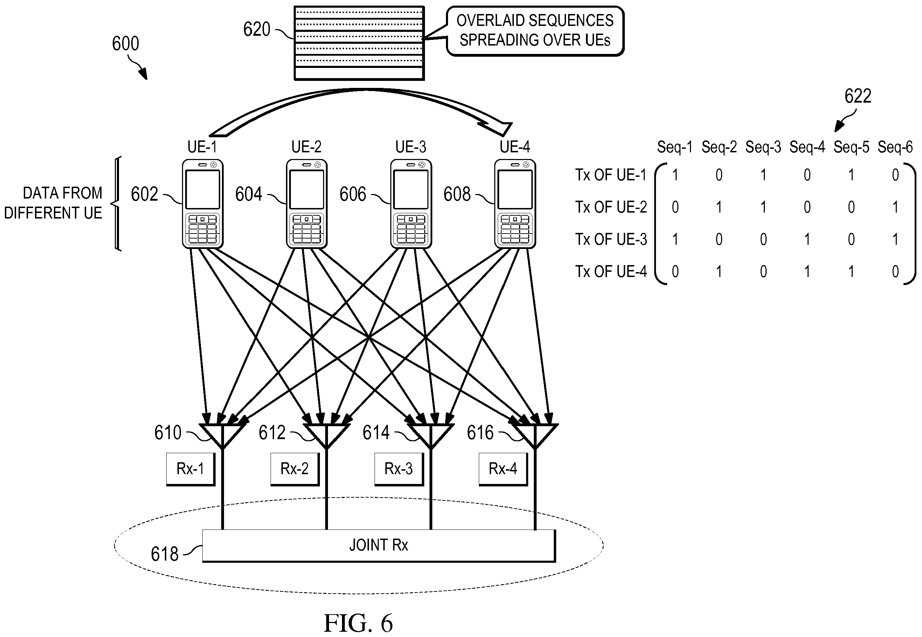

Figure 6 illustrates a third embodiment open-loop MIMO scheme 600 for hyper transceiver (uplink (UL)). With UE cooperative transmission, each of the 6 symbols 620 are spread with a sequence over 4 UEs 602, 604, 606, 608. 6 data symbols 620 are available at all 4 UEs. The UEs 602, 604, 606, 608 exchange data symbols through device-to-device (D2D) communications. 6 overlaid sequences 620 are transmitted by 4 UEs 602, 604, 606, 608 as specified by matrix 622. Each UE 602, 604, 606, 608 has one Tx antenna port. In an embodiment, if a UE 602, 604, 606, 608 has more than one physical Tx antenna, the virtual antenna port concept as described above may be applied to the UE 602, 604, 606, 608. 6 sequences 620 of data may belong to any of the 4 available UEs 602, 604, 606, 608. An embodiment provides cooperative Rx or joint Rx 618 with a centralized signal processing unit. All Rx nodes 610, 612, 614, 616 send the received signals to the centralized unit through backhaul. A more advanced decoding algorithm can be developed by the centralized unit in the network side to provide better decoding performance.

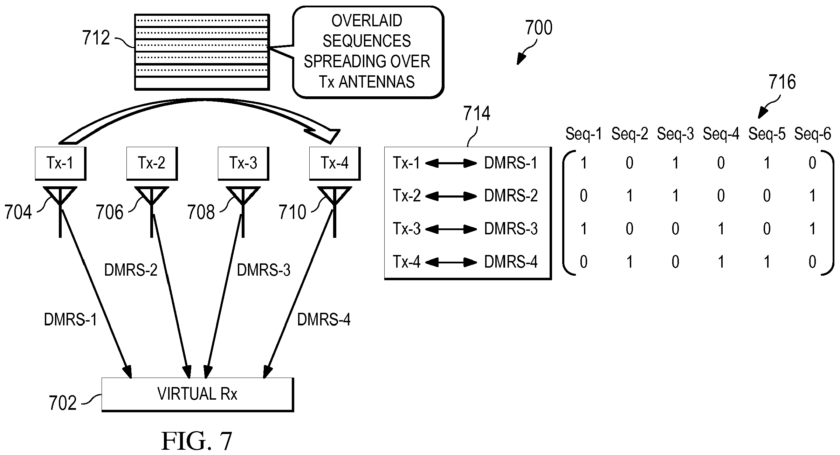

Figure 7 illustrates an embodiment mapping signature scheme 700 to transmit antenna ports. To support transmit port (TP) virtualization, the formation of virtual Tx should be transparent to the UE virtual Rx 702. The virtual TP transmits according to matrix 716. However, the UE virtual receiver 702 needs to know which virtual antenna port 704, 706, 708, 710 corresponds to which element of the signature 716. If the element of the signature 716 is linked with the demodulation reference signal (DMRS) port according to mapping rule 714, the UE and network will have the same understanding of the mapping rule 714.

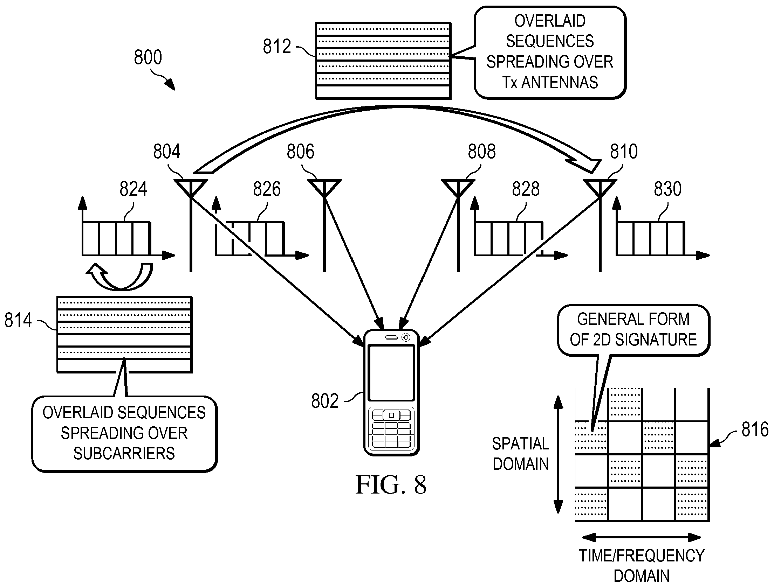

Figure 8 illustrates an embodiment two-dimensional LDS system 800. A two dimensional signature 816 can be applied to both the spatial domain and the time/frequency domain. In a first option, two sets of overlaid signatures 812, 814 are used to spread symbols over both Tx antenna ports 804, 806, 808, 810 and subcarriers 824, 826, 828, 830 respectively and transmitted to the UE 802. The two sets of signatures 812, 814 can be decoded separately or jointly. In a second option, one set of overlaid signatures are used to spread symbols over both Tx antenna ports 804, 806, 808, 810 and subcarriers 824, 826, 828, 830 and transmitted to the UE 802. Joint decoding is used. The same symbol or a different symbol may be carried.

With respect to signaling, the spatial domain LDS mode is defined. The UE sends the capability information to the network indicating whether spatial domain LDS mode can be supported, whether there is single device based reception or a group devices base reception, and whether there is single device based transmission or a group devices base transmission in the UL transmission mode.

The network informs the devices of the enabling of spatial domain LDS mode through multicast radio resource control (RRC) signaling, unicast RRC signaling, or dynamic scheduling signaling.

For single device based reception, the precoder for the mapping between virtual antennas and physical antennas is pre-defined or is signalled to devices by network. For MIMO rank information signaling, if the MIMO rank is determined by the device, the device reports the rank indicator to the network through the UL feedback channel. If the MIMO rank is determined by the network, the network sends the rank indicator/or mapping precoder information to the device through the DL control channel.

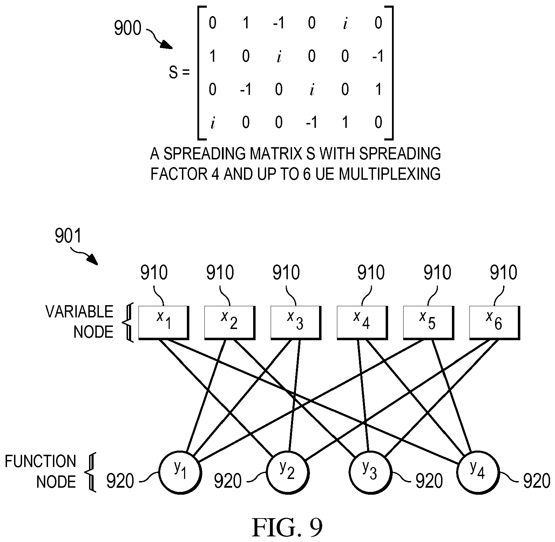

Figure 9 shows an embodiment spreading matrix (**S**) 900 that can be used to define a spreading sequence for LDS modulation (e.g., in transmission). The spreading matrix 900 is an example of a matrix that may be used for matrices 212, 414, 528, 622, and 716 in Figures 2, 4, 5, 6, and 7. The spreading matrix 900 can be implemented at a transmitter to determine output symbols (e.g., for OFDM) of multiplexed data for a plurality of user equipment (UEs) (e.g., in joint transmissions). The spreading matrix 900 has a spreading factor of 4 multiplexing signatures or signals for 6 UEs. The entries of the spreading matrix 900 designate the contributions for each of 6 symbols for 6 respective UEs to each of 4 output resources such as OFDMA tones. Each of the 6 columns is associated with one of the 6 signatures or the 6 UEs, and each of the 4 rows is associated with one of the 4 resources. In other examples, more than one signature can be allocated to a UE. The 6 signatures can be for a single UE or up to 6 UEs.

Figure 9 also shows a graph 901 that connects 6 variable nodes 910 (labeled $x_1$, $x_2$, $x_3$, $x_4$, $x_5$, $x_6$) to 4 function nodes 920 (labeled $y_1$, $y_2$, $y_3$, $y_4$). The graph representation is used to map the relationship between the 6 UE symbols and the 4 resources or tones. Each branch between one variable node 910 and one function node 920 represents a vector of probability values for all possible values (also referred to as constellation points) for that variable node 910. These values represent the complete set of values from which one is assigned to the symbol for the UE corresponding to that variable node 910. Thus, the vector of probabilities in the branch between one variable node 910 and one function node 920 represent a probability distribution (of the possible values) for the contribution of one symbol (corresponding to that variable node 910) to one tone (corresponding to that function node 920).

The probability values in each branch may be log-likelihood ratios (LLRs) in the case of lower modulation orders, such as binary phase-shift keying (BPSK). In the case of higher modulations, such as Quadrature phase-shift keying (QPSK), the values may be normalized reliability values for each of the constellation points. For example, according to the entries in the spreading matrix 900, the function node $y_1$ is a combination of the following variable nodes: $x_2 - x_3 + i\ x_5$. Similarly, $y_2 = x_1 + i\ x_3 - x_6$, $y_3 = -x_2 + i\ x_4 + x_6$, and $y_4 = i\ x_1 - x_4 + x_5$. The 4 multiplexing signatures or signals corresponding to the 4 function nodes 920 are transmitted jointly to a combined receiver for the 6 UEs, where the 4 received signals are then processed using the MPA to obtain the corresponding 6 symbols for the 6 UEs.

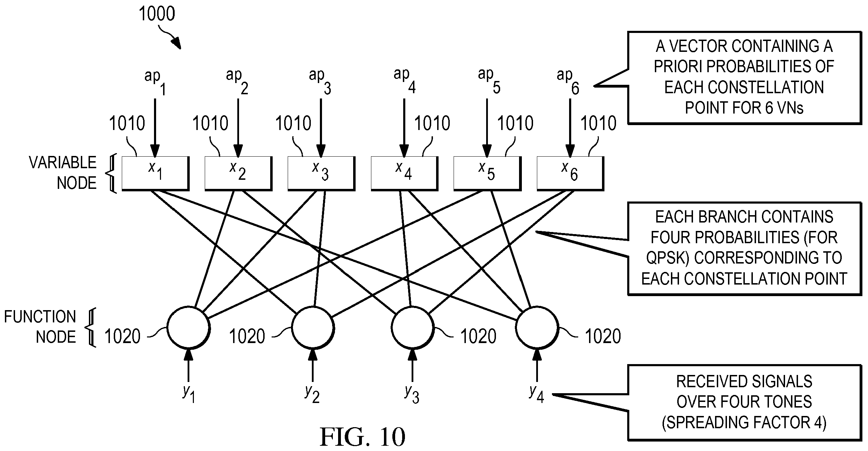

Figure 10 illustrates a standard MPA scheme 1000 that is used for LDS detection based on belief propagation (BP) for Low Density Parity Check (LDPC) decoding. The MPA scheme 1000 can be used at a LDS detector that receives the signals over the 4 tones of Figure 9. The MPA scheme 1000 implements an iterative algorithm to determine the probability values at the variable nodes (VNs) 1010 for the 6 UEs from the 4 function nodes (FNs) 1020. Initially a vector containing a priori (ap) probabilities is used for each of the 6 VNs 1010. The 6 initial vectors for the 6 VNs 1010 are labeled $ap_1$, $ap_2$, $ap_3$, $ap_4$, $ap_5$, $ap_6$.

The MPA scheme 1000 iteratively updates the values at the FNs 1020 according to the values sent from the VNs 1010 (starting from the initial AP values) and subsequently use the updated values at the FNs 1020 to update the values at the VNs 1010. Updating the vectors or values back and forth between the VNs 1010 and the FNs 1020 is also referred to as message passing or exchange between the two node sets. This back and forth information passing between the FNs 1020 and the VNs 1010 is repeated until the probability values at the VNs 1010 converge to a solution. The converged probability values at the VNs 1010 are then processed to determine each of the 6 symbols for the 6 UEs. Additional information concerning MPAs is provided by Hoshyar, et al., in "Novel Low-Density Signature for Synchronous CDMA Systems Over AWGN Channel," IEEE Transactions on Signal Processing, Vol. 56, No. 4, April 2008 , and by Hoshyar, et al., in "Efficient Multiple Access Technique," IEEE 71st VTC 2010, pp. 1-5, both of which are incorporated herein by reference.

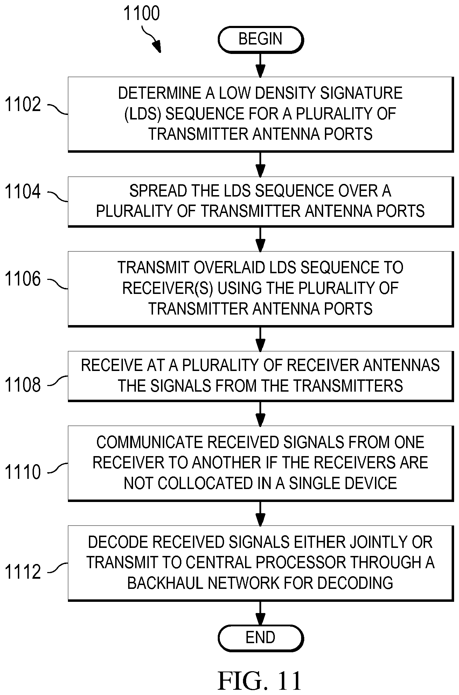

Figure 11 is an embodiment method 1100 for open-loop spatial multiplexing schemes for radio access virtualization. The method 1100 begins at step 1102 where the transmitter or a central processing system determines a low density signature (LDS) sequence for a plurality of sub-carriers. At step 1104, the method 1100 spreads the LDS sequence over a plurality of transmitter antenna ports. At step 1106, the method 1100 transmits the overlaid LDS sequence to one or more receivers using the plurality of transmitter antenna ports. The transmitter ports may be co-located in a single device. At step 1108, the signals from the transmitters are received at a plurality of antennas. In an embodiment, at step 1110, the received signals may be communicated between a plurality of devices if the receiving antennas are not located in a single device. At step 1112, the received signals are decoded either jointly by a plurality of devices corresponding to the plurality of receivers or are transmitted from each receiver to a central processor through a backhaul network for decoding by the central processor, after which, the method 1100 may end. The central processor may be located in one of the devices.

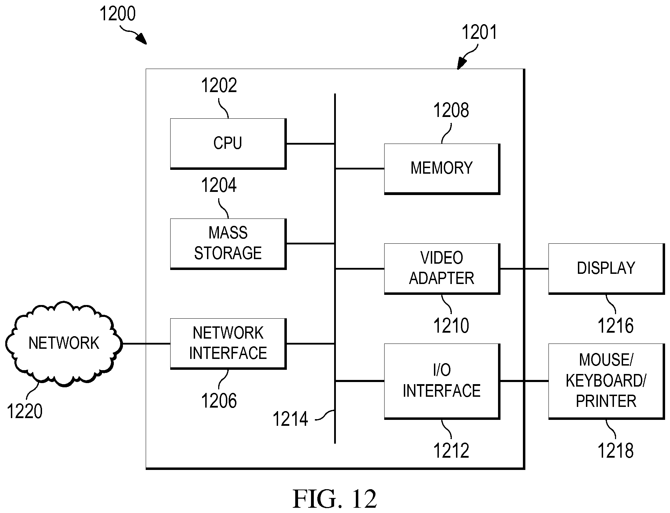

Figure 12 is a block diagram of a processing system 1200 that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system 1200 may include a processing unit 1201 equipped with one or more input/output devices , such as a speaker, microphone, mouse, touchscreen, keypad, keyboard, printer, display, and the like. The processing unit may include a central processing unit (CPU) 1202, memory 1208, a mass storage device 1204, a video adapter 1210, and an I/O interface 1212 connected to a bus 1214.

The bus 1214 may be one or more of any type of several bus architectures including a memory bus or memory controller, a peripheral bus, video bus, or the like. The CPU 1202 may include any type of electronic data processor configured to execute programming instructions. The memory 1208 may include any type of system memory such as static random access memory (SRAM), dynamic random access memory (DRAM), synchronous DRAM (SDRAM), read-only memory (ROM), a combination thereof, or the like. In an embodiment, the memory 1208 may include ROM for use at boot-up, and DRAM for program and data storage for use while executing programs.

The mass storage device 1204 may include any type of storage device (e.g., computer readable storage medium) configured to store data, programs for execution by the CPU 1202, and other information and to make the data, programs, and other information accessible via the bus 1214.

The mass storage device 1204 may include, for example, one or more of a solid state drive, hard disk drive, a magnetic disk drive, an optical disk drive, or the like.

The video adapter 1210 and the I/O interface 1212 provide interfaces to couple external input and output devices to the processing unit 1201. As illustrated, examples of input and output devices include the display 1216 coupled to the video adapter 1210 and the mouse/keyboard/printer 1218 coupled to the I/O interface 1212. Other devices may be coupled to the processing unit 1201, and additional or fewer interface cards may be utilized. For example, a serial interface such as Universal Serial Bus (USB) (not shown) may be used to provide an interface for a printer.

The processing unit 1201 also includes one or more network interfaces 1206, which may include wired links, such as an Ethernet cable or the like, and/or wireless links to access nodes or different networks 1220. The network interface 1206 allows the processing unit 1201 to communicate with remote units via the networks 1220. For example, the network interface 1206 may provide wireless communication via one or more transmitters/transmit antennas and one or more receivers/receive antennas. In an embodiment, the processing unit 1201 is coupled to a local-area network or a wide-area network for data processing and communications with remote devices, such as other processing units, the Internet, remote storage facilities, or the like.

Although the description has been described in detail, it should be understood that various changes, substitutions and alterations can be made without departing from the scope of this disclosure as defined by the appended claims. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

**Claims**

1. A system for open-loop spatial multiplexing for radio access virtualization, comprising:

   a plurality of antenna ports; and
   a processor coupled to the plurality of antenna ports and configured to spread a spreading sequence over at least a portion of the plurality of antenna ports in a spatial domain,
   wherein the processor is configured to cause the antenna ports to transmit multiple spreading sequences simultaneously by sequence superposition, wherein the spreading sequences are selected from a pre-defined pool, such as a matrix, a total number of a plurality of physical antennas is equal to or greater than a spreading factor, and a signature length for a device receiving communication from the antenna ports is determined according to a multiple-input multiple-output (MIMO) rank of the device and the MIMO rank is determined from device feedback and device measurement, wherein the signature length is the number of antenna ports over which the spreading sequence is spread.

2. The system of claim 1, wherein the processor is configured to form virtual transmitter antenna ports from a plurality of physical antennas or configured to map virtual transmitter ports to a plurality of physical antennas.

3. The system of claim 1, further comprising a plurality of physical antennas and wherein the plurality of physical antennas are collocated in a single device or at least some of the plurality of physical antennas are located in different devices.

4. The system of claim 1, wherein a transmit antenna port is linked with a demodulation reference signal (DMRS) port.

5. The system of claim 1, further comprising:

a plurality of receiver antennas, wherein a total number of the plurality of receiver antennas is equal to or greater than a spreading factor.

6. The system of claim 1, wherein at least some of the plurality of antennas are located in different devices and wherein the different devices are configured to exchange data with each other.

7. The system of claim 1, wherein the spreading sequence is any one of the following: a low density signature, a Walsh Hadamard code, a Zadoff-Chu sequence, or, an orthogonal/low correlation sequence.

8. A method for open-loop spatial multiplexing for radio access virtualization, the method comprising:

   determining a spreading sequence for a plurality of transmit antenna ports;
   spreading a signal with the determined spreading sequence over a plurality of transmitter antenna ports; and
   transmitting multiple spread signals simultaneously in a spatial domain superposition, wherein the spreading sequences are selected from a pre-defined pool, such as a matrix, a total number of a plurality of physical antennas is equal to or greater than a spreading factor, and a signature length for one of the multiple spread signals is equal to a multiple-input multiple-output (MIMO) rank supported by a corresponding receiver, wherein the signature length is the number of transmitter antenna ports over which the spreading sequence is spread.

9. The method of claim 8, wherein the transmitter antenna ports comprise virtual antenna ports, and further comprising
   mapping the virtual antenna port to a plurality of physical antennas.

10. The method of claim 8, further comprising determining a spreading factor for a corresponding receiver, wherein a multiple-input multiple-output (MIMO) rank supported by the receiver is less than a number of physical antenna ports of the transmitter, and wherein the spreading factor corresponds to a plurality of virtual antenna ports.

11. The method of claim 8, wherein the multiple spread signals are transmitted to multiple receivers, wherein the multiple receivers communicate directly with each other, and wherein the multiple receivers are configured to jointly decode the multiple spread signals.

12. The method of claim 11, wherein the multiple receivers are configured to utilize a message passing algorithm (MPA) to decode the spread signals.

13. The method of claim 9, wherein two sets of overlaid signatures are used to spread symbols over the transmitter antennas and a plurality of time/frequency sub-carriers, or
one set of overlaid signatures are used to spread symbols over both the transmitter antennas and a plurality of time/frequency sub-carriers.

14. The method of claim 9, further comprising determining a multiple-input multiple-output (MIMO) rank for a single receiver, further comprising:

   receiving MIMO rank feedback from the single receiver through an uplink feedback channel, or transmitting a MIMO rank indicator to the receiver through a downlink control channel.

15. The method of claim 14, wherein a transmit antenna port is linked with a demodulation reference signal (DMRS) port.

16. The method of claim 14, wherein the spreading sequence is a low density signature, or a Walsh Hadamard code, a Zadoff-Chu sequence, or an orthogonal/low correlation sequence.

17. A network component configured for open-loop spatial multiplexing for radio access virtualization, comprising:

   a processor; and
   a computer readable storage medium storing programming for execution by the processor, the programming including instructions to implement action in a method in accordance with any one of claims 8 to 16.

18. A method of claim 8, the method comprising:

   receiving with a plurality of receiver antennas a plurality of overlaid sequences from a plurality of transmit antenna ports, wherein the overlaid sequences comprise a spreading sequence spread over a spatial domain; and
   jointly decoding the overlaid sequences received by a plurality of receiver antennas, or transmitting the overlaid sequences received by a plurality of receiver antennas to a central processor through a backhaul network for decoding.

**Patentansprüche**

1. System zum räumlichen "Open-Loop"-Multiplexen zur Funkzugangsvirtualisierung, aufweisend:

eine Mehrzahl von Antennenanschlüssen; und einen Prozessor gekoppelt mit der Mehrzahl von Antennenanschlüssen und derart gestaltet, dass er eine Spreizsequenz über mindestens einen Abschnitt der Mehrzahl von Antennenanschtüssen in einer räumlichen "Domain" verteilt,

wobei der Prozessor derart gestaltet ist, dass er die Antennenanschlüsse veranlasst, multiple Spreizsequenzen gleichzeltig durch Sequenzüberlagerung zu übertragen, wobei die Spreizsequenzen aus einer vorher definierten Gruppe, zum Beispiel einer Matrix, ausgewählt werden, eine Gesamtzahl einer Mehrzahl von physischen Antennen gleich oder größer einem Spreizfaktor ist, und eine Signaturlänge für eine Vorrichtung, welche eine Nachricht von den Antennenanschlüssen empfang, entsprechend einem "Multiple-Input/Multiple-Output" (MIMO)-Rang der Vorrichtung ermittelt wird, und der MIMO-Rang aus der Vorrichtungsrückmeldung und der Vorrichtungsgröße ermittelt wird, wobei die Signaturlänge die Anzahl von Antennenanschlüssen ist, über welche die Spreizsequenz verteilt wird.

2. System nach Anspruch 1, wobei der Prozessor derart gestaltet ist, dass er virtuelle Senderantenncnanschlüsse aus einer Mehrzahl physischer Antennen bildet, oder derart gestaltet ist, dass er virtuelle Senderanschlüsse einer Mehrzahl physischer Antenne zuordnet.

3. System nach Anspruch 1, ferner aufweisend eine Mehrzahl physischer Antennen, und wobei die Mehrzahl physischer Antennen in einer einzigen Vorrichtung angeordnet sind oder mindestens einige der Mehrzahl physischer Antennen in unterschiedlichen Verrichtungen angeordnet sind.

4. System nach Anspruch 1, wobei ein Sendeantennenanschluss mit einem Demodulationsreferenzsignal(DMRS)-Anschluss verbunden ist.

5. System nach Anspruch 1, ferner aufweisend:

eine Mehrzahl von Empfangerantennen, wobei eine Gesamtzahl der Mehrzahl von Empfängerantennen gleich oder größer einem Spreizfaktor ist.

6. System nach Anspruch 1, wobei mindestens einige der Mehrzahl von Antennen in unterschiedlichen Vorrichtungen angeordnet sind, und wobei die unterschiedlichen Vorrichtungen derart gestaltet sind, dass sie Daten untereinander austauschen.

7. System nach Anspruch 1, wobei die Spreizsequenz irgendeine der folgenden ist: eine Signatur geringer Dichte, ein Walsh Hadamard-Code, eine Zadoff-Chu-Sequenz oder eine orthogonale Sequenz/Sequenz geringer Korrelation.

8. Verfahren zum räumlichen "Open-Loop"-Multiplexen zur Funkzugangsvirtualisierung, das Verfahren umfassend:

das Bestimmen einer Spreizsequenz für eine Mehrzahl von Sendeantennenanschlüssen; das Verteilen eines Signals mit der ermittelten Spreizsequenz über eine Mehrzahl von Senderantenncnanschlüssen; und das gleichzeitige Übertragen multipler Spreizsignale in einer räumlichen Domainüberlagerung, wobei die Spreizsequenzen aus einer vorher definierten Gruppe, zum Beispiel einer Matrix, ausgewählt werden, eine Gesamtzahl einer Mehrzahl physischer Antennen gleich oder größer einem Spreizfaktor ist, und eine Signaturlänge für eines der multiplen Spreizsignale gleich einem "Multiple-Input/Multiple-Output"(MIMO)-Rang ist, der von einem entsprechenden Empfänger unterstützt wird, wobei die Signaturlänge die Anzahl von Senderantennenanschlüssen ist, über welche die Spreizsequenz verteilt wird.

9. Verfahren nach Anspruch 8, wobei die Senderantenncnanschlüsse virtuelle Antennenanschlüsse umfassen, ferner umfassend das Abbilden der virtuellen Antennenanschlüsse auf eine Mehrzahl physischer Antennen.

10. Verfahren nach Anspruch 8, ferner umfassend das Ermitteln eines Spreizfaktors für einen entsprechenden Empfänger, wobei ein "Multiple-Input/Multiple-Output" (MIMO)-Rang, der vom Empfänger unterstützt wird, niedriger ist als eine Anzahl physischer Antennenanschlüsse des Senders, und wobei der Spreizfaktor einer Mehrzahl virtueller Antennenanschlüsse entspricht.

11. Verfahren nach Anspruch 8, wobei die multiplen Spreizsignale zu multiplen Empfänger übertragen werden, wobei die multiplen Empfänger direkt miteinander kommunizieren, and wobei die multiplen Empfänger derart gestaltet sind, dass sie die multiplen Spreizsignale gemeinsam entschlüsseln.

12. Verfahren nach Anspruch 11, wobei die multiplen Empfänger derart gestaltet sind, dass sie einen Nachrichtenaustauschalgorithmus (MPA) benutzen, um die Spreizsignale zu entschlüsseln.

13. Verfahren nach Anspruch 9, wobei zwei Gruppen überlagerter Signaturen verwendet werden, um Symbole über die Senderantennen und eine Mehrzahl von Zeit-/Frequenz-Unterträgern zu verteilen, oder eine Gruppe von überlagerten Signaturen verwendet wird, um Symbole sowohl über die Senderantennen als auch eine Mehrzahl von Zeit-/Frequenz-Unterträgern zu verteilen.

14. Verfahren nach Anspruch 9, ferner umfassend das Ermitteln eines "Multiple-Input/Multiple-Output"(MIMO)-Rangs für einen einzelnen Empfänger, ferner umfassend:

das Empfängen einer MIMO-Rückmeldung vom einzelnen Empfänger durch einen "Uplink"-Rückmeldungskanal, oder
das Übertragen eines MIMO-Rangindikators zum Empfänger durch einen "Downlink"-Kontrollkanal.

15. Verfahren nach Anspruch 14, wobei ein Sendeantennenanschluss mit einem Demodulationsreferenzsignal(DMRS)-Anschluss verbunden ist.

16. Verfahren nach Anspruch 14, wobei die Spreizsequenz eine Signatur geringer Dichte oder ein Walsh Hadamard-Code, eine Zadoff-Chu-Sequenz oder eine orthogonale Sequenz/Sequenz geringer Korrelation ist.

17. Netzwerkkomponente gestaltet für das räumliche "Open-Loop"-Multiplexen zur Funkzugangsvirtualisierung, aufweisend:

einen Prozessor; und
ein computerlesbares Speichermedium, das eine Programmierung zur Ausführung durch den Prozessor speichert, wobei die Programmierung Anweisungen zur Umsetzung von Aktionen in einem Verfahren nach einem der Ansprüche 8 bis 16 umfasst.

18. Verfahren nach Anspruch 8, das Verfahren umfassend:

das Empfangen einer Mehrzahl von überlagerten Sequenzen mit einer Mehrzahl von Empfangerantennen von einer Mehrzahl von Sendeantennenanschlüssen, wobei die überlagerten Sequenzen eine Spreizsequenz aufweisen, welche über eine räumliche "Domain" verteilt sind; und
das gemeinsame Entschlüsseln der durch eine Mehrzahl von Empfangerantennen empfangenen überlagerten Sequenzen, oder das Übertragen der durch eine Mehrzahl von Empfängerantennen empfangenen überlagerten Sequenzen zu einem Zentralprozessor durch ein Anbindungsnetzwerk zum Entschlüsseln.

**Revendications**

1. Système de multiplexage spatial à boucle ouverte pour une visualisation d'accès radio, comprenant :

une pluralité de ports d'antenne ; et
un processeur couplé à la pluralité de ports d'antenne et configuré pour étaler une séquence d'étalement sur au moins une portion de la pluralité de ports d'antenne dans un domaine spatial,
dans lequel le processeur est configuré pour amener les ports d'antenne à émettre simultanément de multiples séquences d'étalement par superposition de séquence,
dans lequel les séquences d'étalement sont sélectionnées dans une réserve prédéfinie, telle qu'une matrice, un nombre total d'une pluralité d'antennes physiques est supérieur ou égal à un facteur d'étalement, et une longueur de signature pour un dispositif recevant une communication des ports d'antenne est déterminée selon un rang entrées multiples, sorties multiples (MIMO) du dispositif et le rang MIMO est déterminé à partir d'une rétroaction de dispositif et d'une mesure de dispositif, dans lequel la longueur de signature est le nombre de ports d'antenne sur lesquels la séquence d'étalement est étalée.

2. Système selon la revendication 1, dans lequel le processeur est configuré pour former des ports d'antenne émetteurs virtuels à partir d'une pluralité d'antennes physiques ou configuré pour mettre en correspondance des ports émetteurs virtuels avec une pluralité d'antennes physiques.

3. Système selon la revendication 1, comprenant en outre une pluralité d'antennes physiques et dans lequel la pluralité d'antennes physiques sont colocalisées dans un dispositif unique ou au moins certaines de la pluralité d'antennes physiques sont localisées dans des dispositifs différents.

4. Système selon la revendication 1, dans lequel un port d'antenne d'émission est lié à un port de signal de référence de démodulation (DMRS).

5. Système selon la revendication 1, comprenant en outre :

une pluralité d'antennes réceptrices, dans lequel un nombre total de la pluralité d'antennes réceptrices est supérieur ou égal à un facteur d'étalement.

6. Système selon la revendication 1, dans lequel au moins certaines de la pluralité d'antennes sont localisées dans des dispositifs différents et dans lequel les dispositifs différents sont considérés pour échanger des données les uns avec les autres.

7. Système selon la revendication 1, dans lequel la séquence d'étalement est l'une quelconque de ce qui suit : une signature basse densité, un code Walsh Hadamard, une séquence Zadoff-Chu, ou, une séquence de corrélation orthogonale/faible.

8. Procédé de multiplexage spatial à boucle ouverte pour une virtualisation d'accès radio, le procédé comprenant :

la détermination d'une séquence d'étalement pour une pluralité de ports d'antenne d'émission ;
l'étalement d'un signal avec la séquence d'étalement déterminée sur une pluralité de ports d'antenne émetteurs ; et
l'émission simultanée de multiples signaux d'étalement dans une superposition de domaine spatial, dans lequel les séquences d'étalement sont sélectionnées dans une réserve prédéfinie, telle qu'une matrice, un nombre total d'une pluralité d'antennes physiques est supérieur ou égal à un facteur d'étalement, et une longueur de signature pour l'un des multiples signaux d'étalement est égale à un rang entrées multiples, sorties multiples (MIMO) pris en charge par un récepteur correspondant, dans lequel la longueur de signature est le nombre de ports d'antenne émetteurs sur lesquels la séquence d'étalement est étalée.

9. Procédé selon la revendication 8, dans lequel les ports d'antenne émetteurs comprennent des ports d'antenne virtuels, et comprenant en outre la mise en correspondance du port d'antenne virtuel avec une pluralité d'antennes physiques.

10. Procédé selon la revendication 8, comprenant en outre la détermination d'un facteur d'étalement pour un récepteur correspondant, dans lequel un rang entrées multiples, sorties multiples (MIMO) pris en charge par un récepteur est inférieur à un nombre de ports d'antenne physique de l'émetteur, et dans lequel le facteur d'étalement correspond à une pluralité de ports d'antenne virtuels.

11. Procédé selon la revendication 8, dans lequel les multiples signaux d'étalement sont émis vers de multiples récepteurs, dans lequel les multiples récepteurs communiquant directement les uns avec les autres, et dans lequel les multiples récepteurs sont configurés pour décoder conjointement les multiples signaux d'étalement.

12. Procédé selon la revendication 11, dans lequel les multiples récepteurs sont configurés pour employer un algorithme de passage de message (MPA) pour décoder les signaux d'étalement.

13. Procédé selon la revendication 9, dans lequel deux ensembles de signatures recouvertes sont utilisés pour étaler des symboles sur les antennes émettrices et une pluralité de sous-porteuses de temps/fréquence, ou un ensemble de signatures recouvertes est utilisé pour étaler des symboles à la fois sur les antennes émettrices et une pluralité de sous-porteuses de temps/fréquence.

14. Procédé selon la revendication 9, comprenant en outre la détermination d'un rang entrées multiples, sorties multiples (MIMO) pour un récepteur unique, comprenant en outre :

la réception d'une rétroaction de rang MIMO en provenance du récepteur unique par l'intermédiaire d'un canal de rétroaction de liaison montante, ou
l'émission d'un indicateur de rang MIMO vers le récepteur par l'intermédiaire d'un canal de commande de liaison descendante.

15. Procédé selon la revendication 14, dans lequel un port d'antenne d'émission est lié à un port de signal de référence de démodulation (DMRS).

16. Procédé selon la revendication 14, dans lequel la séquence d'étalement est une signature de faible densité, ou un code Walsh Hadamard, une séquence Zadoff-Chu, ou une séquence de corrélation orthogonale/faible.

17. Composant de réseau configuré pour un multiplexage spatial à boucle ouverte pour une virtualisation d'accès radio, comprenant :

un processeur ; et
un support de stockage lisible par ordinateur stockant une programmation pour exécution par le processeur, la programmation comportant des instructions pour implémenter une action dans un procédé conformément à l'une quelconque des revendications 8 à 16.

18. Procédé selon la revendication 8, le procédé comprenant :

la réception avec une pluralité d'antennes réceptrices, d'une pluralité de séquences recouvertes en provenance d'une pluralité de ports d'antenne d'émission, dans lequel les séquences recouvertes comprennent une séquence d'étalement étalée sur un domaine spatial ; et

le décodage conjoint des séquences recouvertes reçues par une pluralité d'antennes réceptrices, ou l'émission des séquences recouvertes reçues par une pluralité d'antennes réceptrices vers un processeur central par l'intermédiaire d'un réseau d'amenée pour un décodage.

FIG. 1

FIG. 2

300

318

OVERLAID
SEQUENCES
SPREADING OVER
Tx ANTENNAS

Tx-1    Tx-2    Tx-3    Tx-4

302     304     306     308

310  Rx-1   312  Rx-2   Rx-3  314   Rx-4  316

FIG. 3

412

OVERLAID
SEQUENCES
SPREADING OVER
Tx ANTENNAS

400

414

Tx-1    Tx-2    Tx-3    Tx-4

404     406     408     410

DMRS-2        DMRS-3

DMRS-1                   DMRS-4

402    Rx

|       | Seq-1 | Seq-2 | Seq-3 | Seq-4 | Seq-5 | Seq-6 |
|-------|-------|-------|-------|-------|-------|-------|
| Tx-1  | 1     | 0     | 1     | 0     | 1     | 0     |
| Tx-2  | 0     | 1     | 1     | 0     | 0     | 1     |
| Tx-3  | 1     | 0     | 0     | 1     | 0     | 1     |
| Tx-4  | 0     | 1     | 0     | 1     | 1     | 0     |

FIG. 4

FIG. 5

FIG. 6

FIG. 7

FIG. 8

A SPREADING MATRIX S WITH SPREADING
FACTOR 4 AND UP TO 6 UE MULTIPLEXING

FIG. 9

FIG. 10

EP 2 923 457 B1

A VECTOR CONTAINING A PRIORI PROBABILITIES OF EACH CONSTELLATION POINT FOR 6 VNs

EACH BRANCH CONTAINS FOUR PROBABILITIES (FOR QPSK) CORRESPONDING TO EACH CONSTELLATION POINT

RECEIVED SIGNALS OVER FOUR TONES (SPREADING FACTOR 4)

$ap_1$ $ap_2$ $ap_3$ $ap_4$ $ap_5$ $ap_6$

1010 1010 1010 1010 1010 1010

VARIABLE NODE

$x_1$ $x_2$ $x_3$ $x_4$ $x_5$ $x_6$

FUNCTION NODE

1020 1020 1020 1020

$y_1$ $y_2$ $y_3$ $y_4$

1000

1100

BEGIN

1102 — DETERMINE A LOW DENSITY SIGNATURE (LDS) SEQUENCE FOR A PLURALITY OF TRANSMITTER ANTENNA PORTS

1104 — SPREAD THE LDS SEQUENCE OVER A PLURALITY OF TRANSMITTER ANTENNA PORTS

1106 — TRANSMIT OVERLAID LDS SEQUENCE TO RECEIVER(S) USING THE PLURALITY OF TRANSMITTER ANTENNA PORTS

1108 — RECEIVE AT A PLURALITY OF RECEIVER ANTENNAS THE SIGNALS FROM THE TRANSMITTERS

1110 — COMMUNICATE RECEIVED SIGNALS FROM ONE RECEIVER TO ANOTHER IF THE RECEIVERS ARE NOT COLLOCATED IN A SINGLE DEVICE

1112 — DECODE RECEIVED SIGNALS EITHER JOINTLY OR TRANSMIT TO CENTRAL PROCESSOR THROUGH A BACKHAUL NETWORK FOR DECODING

END

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120114021 A1
- US 20070211786 A1
- WO 2008024462 A2
- US 61788881 A

### Non-patent literature cited in the description

- **R HOSHYAR et al.** Novel Low-Density Signature for Synchronous CDMA Systems Over AWGN Channel. *IEEE TRANS. ON SIGNAL PROCESSING,* April 2008, vol. 56 (4
- **HOSHYAR et al.** Novel Low-Density Signature for Synchronous CDMA Systems Over AWGN Channel. *IEEE Transactions on Signal Processing,* April 2008, vol. 56 (4
- **HOSHYAR et al.** Efficient Multiple Access Technique. *IEEE 71st VTC,* 2010, 1-5